Europäisches Patentamt

European Patent Office

Office européen des brevets

(19)

(11) **EP 0 866 570 A1**

(12) **DEMANDE DE BREVET EUROPEEN**

(43) Date de publication:
   **23.09.1998 Bulletin 1998/39**

(51) Int Cl.$^6$: **H04B 7/185**

(21) Numéro de dépôt: **98400393.9**

(22) Date de dépôt: **18.02.1998**

(84) Etats contractants désignés:
   **AT BE CH DE DK ES FI FR GB GR IE IT LI LU MC NL PT SE**
   Etats d'extension désignés:
   **AL LT LV MK RO SI**

(30) Priorité: **26.02.1997 FR 9702392**

(71) Demandeur: **FRANCE TELECOM**
   **75015 Paris (FR)**

(72) Inventeurs:
   • **Maral, Gérard**
     **31120 Goyrans (FR)**
   • **Restrepo, Joaquin**
     **56006 Medellin (CO)**

(74) Mandataire: **Martinet & Lapoux**
   **43 Boulevard Vauban,**
   **B.P. 405 - Guyancourt**
   **78055 St. Quentin en Yvelines Cedex (FR)**

(54) **Transfert d'une communication dans une constellation de satellites non géostationnaires**

(57)   Le terminal d'un usager prédéterminé (UG(i)) d'un système de télécommunications à constellation de satellites non-géostationnaires effectue, suite à une demande d'établissement de communication émise par celui-ci (E0), réserve un canal (E6) dans la cellule où il se trouve, ainsi que dans des cellules voisines n'incluant pas toutes les cellules qu'il sera amené à traverser pendant une durée prédéterminée. Pour chacune des cellules où la réservation n'a pas été effectuée, le terminal de l'usager prédéterminé attend de se trouver à une distance prédéterminée de son point de transfert dans la cellule, égale au plus grand parcours possible d'un usager dans cette cellule, pour émettre une demande de réservation (E4). La demande d'établissement de communication est acceptée seulement si une condition (E17) concernant le nombre d'autres usagers situés au voisinage de l'usager prédéterminé lors de la demande d'établissement de communication est satisfaite.

FIG.2A

## Description

La présente invention concerne, de manière générale, les constellations de satellites non-géostationnaires avec cellules rattachées au satellite.

Plusieurs projets de constellations de satellites non-géostationnaires proposent d'offrir des services de télécommunications de type circuits, tels que la téléphonie, la télécopie et la transmission de données à des usagers mobiles. Ces projets sont notamment le projet IRIDIUM (marque déposée) de la société américaine MOTOROLA, le projet GLOBALSTAR (marque déposée) de la société américaine LORAL SPACE SYSTEMS, le projet ICO proposé par la société INMARSAT et le projet ODYSSEY (marque déposée) de la société américaine TRW.

Dans ces constellations, les satellites sont équipés d'antennes multifaisceaux. Chaque faisceau définit sur la surface de la terre un contour délimitant une couverture appelée "cellule". En l'absence de dispositif particulier de pointage variable dans le temps des antennes, les faisceaux, et donc les cellules associées, conservent une position fixe par rapport au corps du satellite. Ce concept porte donc le nom de système satellitaire à cellule rattachée au satellite ("satellite-fixed cell" en anglais). En raison du défilement des satellites, les cellules se déplacent à la surface de la Terre, et les communications en cours doivent changer de cellule lorsque la durée de la communication dépasse le temps de passage de la cellule au-dessus de l'usager. Ce changement de cellule est appelé transfert de communication de faisceau à faisceau ("beam handover" en anglais). Eventuellement les communications doivent être transférées d'un satellite au suivant ("satellite handover").

Lors de ces transferts, il se peut que la cellule ou le satellite prenant en charge la communication en cours ne dispose d'aucun canal libre, et la communication est alors interrompue ("forced call termination" en anglais). Les usagers mobiles desservis actuellement par les réseaux cellulaires terrestres rencontrent le même problème, mais en raison de la mobilité des usagers. Pour les usagers fixes des réseaux cellulaires terrestres qui restent dans la même cellule pendant toute la durée de leur communication, il n'y a pas de transfert de communication d'une cellule à l'autre, donc pas d'interruption de communication. Etant donné que les constellations de satellites non-géostationnaires ont pour objectif de constituer une extension du service cellulaire terrestre, il serait souhaitable de pouvoir offrir une qualité de service équivalente à celle des réseaux cellulaires terrestres. En outre, ces constellations pourront éventuellement fournir des services de communications aux usagers fixes. Pour offrir aux usagers fixes une qualité équivalente à celle des systèmes terrestres ou des systèmes à satellites géostationnaires, il faut éviter à ces usagers fixes toute interruption de communication due aux transferts de cellule à cellule résultant du mouvement des satellites.

Les constellations de satellites non-géostationaires envisagées à ce jour sont prévues pour offrir des services de communications aux usagers mobiles, et pourront offrir des services aux usagers fixes, mais sans garantir aux usagers mobiles ou fixes la réussite des transferts de communications de faisceau à faisceau ou de satellite à satellite. Cela signifie que la qualité du service offert aux usagers fixes dans ces constellations sera inférieure à celle fournie par d'autres systèmes de télécommunications tels qu'à faisceaux hertziens, fibres optiques, satellites géostationnaires, etc. Cet inconvénient fait de ces constellations une alternative peu intéressante pour les usagers fixes.

Un procédé pour garantir la continuité des communications des usagers lors des transferts de communications de faisceau à faisceau ou de satellite à satellite dans les systèmes à constellations de satellites non-géostationnaires consiste à réserver, lors de la demande d'établissement d'une communication par un usager, un canal dans chacune des cellules que cet usager est appelé à traverser pendant la communication. Mais outre le fait qu'il est difficile de prévoir la durée exacte d'une communication, et donc le nombre de cellules concernées, ce procédé conduit à un surdimensionnement inutile de la capacité du satellite.

Dans un autre procédé, divulgué dans l'article des inventeurs intitulé "Providing appropriate service quality to fixed and mobile users in a non-geo satellite-fixed cell system", paru dans les "Proceedings of the Second European Workshop on Mobile/Personal Satcoms", EMPS'96, partie 2, pages 79-96, un usager réserve immédiatement après une demande d'établissement de communication un canal dans la cellule où il se trouve, ainsi que dans la cellule suivante qu'il sera amené à traverser. Ensuite, à chaque fois que l'usager pénètre dans une cellule, il effectue une demande de réservation de canal dans la cellule suivante. Ce procédé permet de garantir le transfert des communications de l'usager d'une cellule à l'autre, mais seulement dans le cas particulier où toutes les cellules sont identiques, de forme rectangulaire, jointives et alignées relativement à la direction de défilement des satellites.

La présente invention vise à remédier aux inconvénients précités et garantir la réussite des transferts des communications d'usagers d'une constellation de satellites non-géostationnaires, pendant des durées respectives définies à l'avance par ces usagers, tout en réservant le nombre de canaux strictement nécessaire, et pendant le temps minimal, dans les cellules que les usagers traversent, quelles que soient la forme et la disposition des cellules.

A cette fin, un procédé de transfert de communications d'usagers prédéterminés dans un système de télécommunications cellulaire à constellation de satellites non-géostationnaires avec cellules rattachées aux satellites, lesdites cellules, auxquelles des canaux de communication sont respectivement associés, ayant des contours respectifs prédéterminés et, se déplaçant relativement à la surface de la Terre suivant une direction prédéterminée, la vitesse des usagers prédéterminés par rapport à la surface de la Terre étant négligée devant la vitesse de déplacement des cellules, la position des usagers prédéterminés étant connue lors de chacune des demandes d'établissement de communication émises par des terminaux des usagers prédéterminés,

comprenant pour un usager donné parmi lesdits usagers prédéterminés après une demande d'établissement de communication émise par le terminal de celui-ci et pour chaque cellule d'un groupe prédéterminé de cellules adjacentes auxquelles ledit usager donné est susceptible d'être successivement affecté, l'usager donné se trouvant dans une première cellule dudit groupe prédéterminé lors de ladite demande d'établissement de communication :

- des premières étapes selon lesquelles si une première distance séparant lors de ladite demande d'établissement de communication l'usager donné d'un point de transfert prédéterminé de l'usager donné dans ladite chaque cellule, la première distance étant nulle lorsque ladite chaque cellule est la première cellule du groupe prédéterminé, est supérieure à une distance prédéterminée égale à une longueur maximale de ladite chaque cellule parallèlement à ladite direction prédéterminée, une réservation d'un canal de communication associé à ladite chaque cellule est demandée pour/par le terminal de l'usager donné lorsque le terminal de l'usager donné se trouve sensiblement à ladite distance prédéterminée dudit point de transfert prédéterminé,

est caractérisé en ce qu'il comprend en outre :

- des secondes étapes selon lesquelles si ladite première distance est inférieure à ladite distance prédéterminée, alors (a) s'il existe un canal de communication libre associé à ladite chaque cellule, ce canal est réservé pour/par le terminal de l'usager donné, (b) si ladite chaque cellule est différente de la première cellule et si aucun des canaux associés à ladite chaque cellule n'est libre mais si, parmi ceux-ci, il existe un canal non-réservé occupé par le terminal d'un usager quelconque du système de télécommunications situé à une distance du contour de ladite chaque cellule suivant une direction opposée à la direction prédéterminée inférieure à la première distance, ce canal est réservé pour/par le terminal de l'usager donné, (c) sinon, ladite demande d'établissement de communication est refusée, et
- des troisièmes étapes selon lesquelles ladite demande d'établissement de communication est refusée si un nombre d'usagers prédéterminés en cours de communication et inclus dans l'une de zones obtenues par translation de ladite chaque cellule suivant ladite direction prédéterminée d'une distance comprise entre ladite première distance et une seconde distance est au moins égal à une capacité en canaux de communication de ladite chaque cellule, ladite seconde distance séparant lors de la demande d'établissement de commmunication l'usager donné d'un point de transfert prédéterminé de l'usager donné dans une cellule d'affectation succédant à ladite chaque cellule.

Suite à la demande d'établissement de communication, l'usager donné se trouvant d'abord dans la première cellule du groupe prédéterminé, une réservation de canal de communication est donc immédiatement demandée dans cette cellule ainsi qu'éventuellement dans des cellules adjacentes du groupe prédéterminé proches de la première cellule. Une demande de réservation de canal de communication est ensuite effectuée dans chacune des autres cellules du groupe prédéterminé, qui sont plus éloignées de la première cellule, seulement lorsque l'usager se trouve à la distance prédéterminée correspondante de son point de transfert dans cette cellule. Ce procédé permet de minimiser le temps pendant lequel les canaux de communication sont réservés.

Par ailleurs, si aucun refus de demande d'établissement de communication ne survient pour l'usager donné, les transferts d'une communication consécutive à la demande d'établissement de communication précitée seront garantis.

Le procédé conforme à l'invention s'applique aux usagers mobiles, dans la mesure où leur vitesse est suffisamment faible par rapport à la vitesse de défilement des cellules relativement à la surface de la Terre. Cette condition est réalisée pour les constellations de satellites non-géostationnaires envisagées. La vitesse de défilement des cellules relativement à la surface de la terre est en effet de 7 km/s pour les constellations en orbite basse, c'est-à-dire de 500 à 2000 km d'altitude, et de 1 à 2 km/s pour les constellations en orbite intermédiaire, de 10000 à 20000 km d'altitude. La plupart des mobiles tels que piétons, mobiles terrestres et maritimes, ou aéronefs subsoniques sont ainsi concernés par ce procédé.

De préférence, selon l'invention, ledit nombre d'usagers prédéterminés en cours de communication concerne seulement des usagers prédéterminés dont les groupes prédéterminés de cellules adjacentes respectifs incluent ladite chaque cellule. Dans ce cas, ledit nombre d'usagers prédéterminés en cours de communication est toujours inférieur ou égal à la capacité en canaux de communication de ladite chaque cellule. Les usagers prédéterminés concernés ici sont soit des usagers susceptibles d'être ultérieurement affectés à ladite chaque cellule et n'ayant encore demandé aucune réservation de canal dans cette cellule, soit des usagers non encore affectés à cette cellule mais ayant demandé une réservation de canal dans celle-ci, soit des usagers utilisant déjà un canal de ladite chaque cellule.

Selon une variante du procédé, si, lors de la demande d'établissement de communication émise par le terminal de l'usager donné, la première distance séparant l'usager donné de son point de transfert prédéterminé dans ladite chaque cellule est supérieure à la distance prédéterminée, la réservation de canal de communication n'est demandée que si un nombre d'usagers prédéterminés en cours de communication inclus dans une zone obtenue par translation de ladite chaque cellule suivant la direction prédéterminée de la première distance, et dont les groupes prédéterminés de cellules adjacentes respectifs incluent de préférence ladite chaque cellule, est inférieur à la capacité en canaux de communication de ladite chaque cellule.

Le groupe prédéterminé de cellules adjacentes peut être constitué d'une part de sorte que l'usager donné ne soit transféré dans ladite chaque cellule, lorsque celle-ci est une cellule autre que la première cellule du groupe prédéterminé, qu'après être resté affecté le plus longtemps possible à une cellule précédente, et d'autre part de sorte que lorsque, en sortie d'une cellule du groupe prédéterminé, l'usager donné est inclus simultanément dans plusieurs cellules du système de télécommunications, la cellule parmi ces dernières à laquelle il est affecté soit celle dans laquelle son temps de passage est le plus long. De cette manière, le nombre de transferts à réaliser pour l'usager donné au cours d'une communication consécutive à sa demande d'établissement de commmunication est minimisé.

Typiquement, le nombre de cellules incluses dans le groupe prédéterminé de cellules dépend d'une durée préalablement définie, par exemple par l'usager donné, au cours de laquelle le procédé est appliqué pour l'usager donné après chaque demande d'établissement de communication émise par le terminal de celui-ci.

Selon une seconde réalisation de l'invention, le procédé comprend en outre une étape pour supprimer préalablement dans chacune des cellules du système de télécommunications au moins une zone de chevauchement avec une autre cellule de ce même système de télécommunications.

Selon une troisième réalisation de l'invention, les cellules sont identiques, de forme rectangulaire, jointives et alignées relativement à la direction prédéterminée, et lesdites troisièmes étapes sont supprimées.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 représente deux satellites d'une constellation de satellites non-géostationnaires placés sur une même orbite et des cellules rattachées à ces satellites ;
- la figure 2A est un algorithme de transfert de communication conforme à des première et seconde réalisations de la présente invention ;
- la figure 2B est un sous-algorithme inclus dans l'algorithme de la figure 2A ;
- les figures 3A et 3B montrent respectivement des cellules susceptibles d'être traversées par un usager pendant une communication, et des cellules auxquelles l'usager sera susceptible d'être affecté pendant cette communication ;
- la figure 4 est un diagramme de zones obtenues par translation d'une cellule d'affectation de l'usager utilisées dans l'algorithme de la figure 2 ;
- la figure 5 est un diagramme pour déterminer une distance maximale dans une cellule, utilisée dans l'algorithme de la figure 2 ;
- les figures 6A et 6B sont des diagrammes de deux configurations de position de l'usager par rapport à une cellule d'affectation ;
- la figure 7A est un diagramme d'une cellule dans laquelle une distance maximale reste à parcourir par un usager quelconque ;
- la figure 7B est un diagramme d'une cellule dans laquelle des usagers sont classés en fonction de leur distance maximale restant à parcourir ;
- la figure 8 est un diagramme pour réduire une cellule selon une seconde réalisation de l'invention
- la figure 9 est un diagramme de zones obtenues par translation d'une cellule d'affectation réduite selon la seconde réalisation ;
- la figure 10 représente des cellules identiques rectangulaires utilisées dans une troisième réalisation de l'invention ;
- la figure 11 est un algorithme de transfert de communication conforme à la troisième réalisation de l'invention ; et
- la figure 12 illustre des cellules rattachées à des satellites se déplaçant suivant des directions différentes.

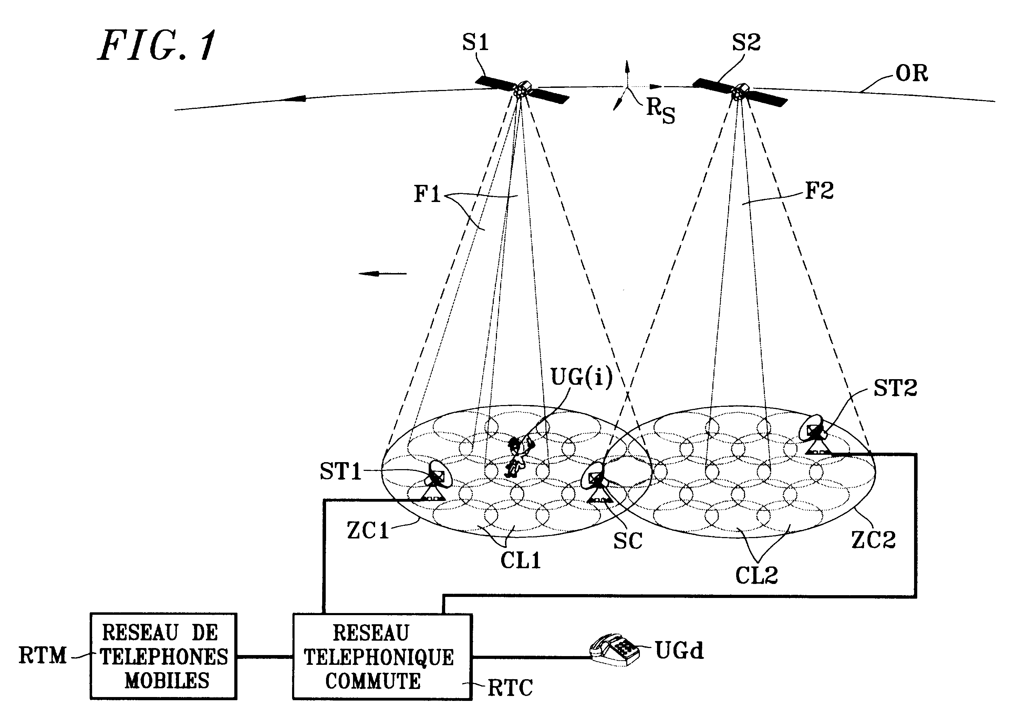

En référence à la figure 1, des satellites S1 et S2 défilent autour de la Terre sur une même orbite basse ou intermédiaire OR à une vitesse relative constante connue $V_S$ par rapport à la surface de la Terre. Les satellites S1 et S2 appartiennent à une constellation de satellites non-géostationnaires comprenant typiquement plusieurs orbites et plusieurs satellites par orbite. Selon le projet IRIDIUM (marque déposée) de la société américaine MOTOROLA par exemple, la constellation de satellites non-géostationnaires est constituée de 66 satellites répartis en 6 plans d'orbite à une altitude de 787 km.

Plusieurs faisceaux d'antenne F1, F2 de chaque satellite S1, S2 définissent à la surface de la Terre respectivement des contours délimitant des zones de couverture dites cellules CL1, CL2. Les cellules CL1, CL2 sont rattachées au satellite S1, S2 et se déplacent donc à la surface de la Terre. Les contours des cellules CL1, CL2 correspondent à des valeurs constantes d'un paramètre radioélectrique, par exemple le gain, associé aux antennes du satellite S1, S2. Le satellite S1, S2 couvre une zone de couverture totale ZC1, ZC2 constituée de la réunion des cellules CL1, CL2.

Des stations terriennes ST1 et ST2 fixes par rapport à la Terre émettent et reçoivent des signaux de communication afin d'échanger des informations entre des réseaux terrestres, tels que le réseau téléphonique commuté RTC ou un réseau terrestre de téléphones mobiles RTM, et les satellites S1 et S2 de la constellation de satellites non-géostationnaires. Ainsi, lorsqu'un usager fixe ou mobile UG(i) situé dans la zone de couverture totale ZC1 du satellite S1, et plus particulièrement dans une cellule CL1, disposant d'un terminal radiotéléphonique capable d'émettre et de recevoir des signaux radioélectriques, souhaite établir une communication par exemple avec un usager UGd du réseau téléphonique commuté RTC, une demande d'établissement de communication est émise par le terminal de l'usager fixe ou mobile UG(i) via un canal de signalisation montant d'un faisceau F1 vers le satellite S1 puis retransmise vers une station terrienne ST1 reliée au réseau téléphonique commuté RTC afin d'être transmise au terminal de l'usager fixe UGd. Pendant une communication entre les terminaux des usagers UG(i) et UGd, consécutives à la demande d'établissement de communication précitée, des cellules CL1, CL2 se déplaçant à la surface de la Terre passent successivement au-dessus de l'usager UG(i) si la durée de la communication excède le temps de passage de l'usager UG(i) dans une cellule. Le procédé selon l'invention assure le transfert de cette communication en cours d'une cellule à la suivante sans interruption de celle-ci.

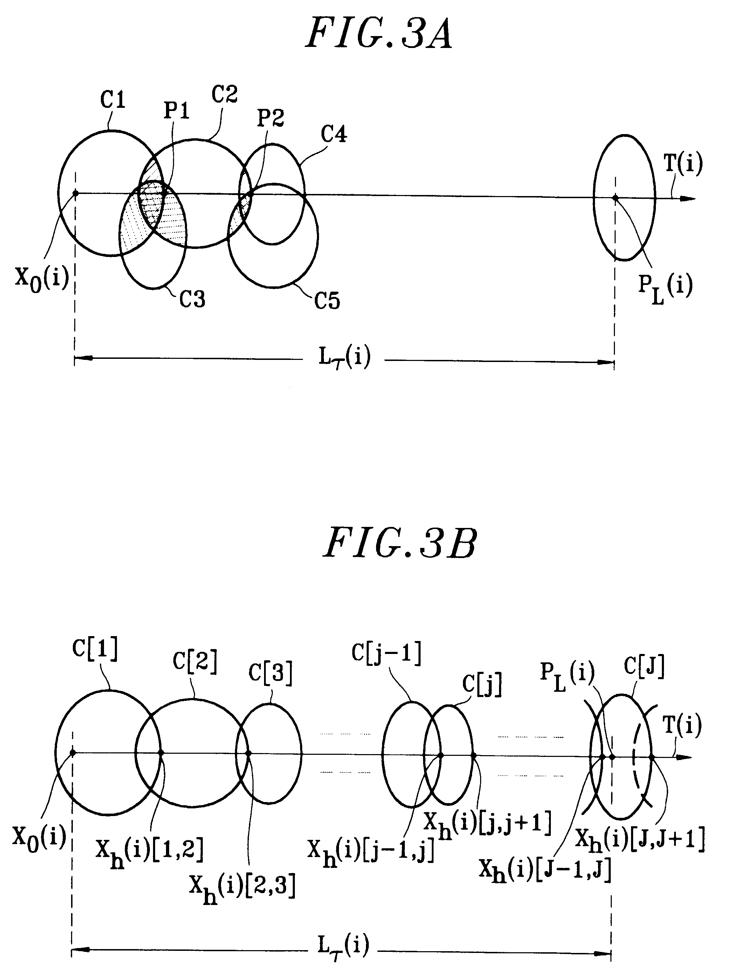

Dans la suite de la description, tous les déplacements sont considérés dans un référentiel $R_S$ fixe par rapport aux satellites. Dans le référentiel $R_S$, les satellites sont fixes et l'usager UG(i), dont la vitesse relativement à la surface de la terre est négligée, se déplace selon une trajectoire rectiligne T(i), illustrée à la figure 3A, suivant une direction opposée à la direction de défilement des satellites relativement à la surface de la Terre. La trajectoire rectiligne T(i) dépend des vitesses des satellites et de la vitesse de rotation de la Terre, ainsi que de la position initiale $X_0(i)$ de l'usager UG(i) lors d'une demande d'établissement de communication effectuée par le terminal de celui-ci. Cette position initiale $X_0(i)$ est supposée connue. Elle est par exemple déterminée grâce à l'émission par le terminal de l'usager UG(i) de messages de signalisation vers le système de télécommunications cellulaire à satellites S1, S2.

A des fins de simplification, on considère seulement ci-après les distances parcourues par l'usager UG(i) dans les cellules au lieu des temps de passage dans ces cellules. La conversion temps-distance est donnée par :

$$X(i) = V_S\, t$$

où X(i) est la distance parcourue par l'usager UG(i) pendant la durée t et $V_S$ la vitesse précitée des satellites relativement à la surface de la terre.

Selon l'invention, l'usager UG(i) a préalablement souscrit à un service "à transferts garantis" ATG décrit ci-après. A cet effet, l'usager UG(i) a défini une durée maximale prédéterminée τ(i) au cours de laquelle le service ATG lui est appliqué pour chaque communication avec un autre usager. La durée τ(i), dite durée prédéterminée maximale de transferts garantis, correspond selon la conversion temps-distance ci-dessus à une distance prédéterminée maximale de transferts garantis $L_\tau$ (i) = $V_S$τ(i). Si la durée d'une communication de l'usager UG(i) dépasse la durée maximale τ(i), l'usager UG(i) ne bénéficie plus du service ATG pendant le temps restant de la communication.

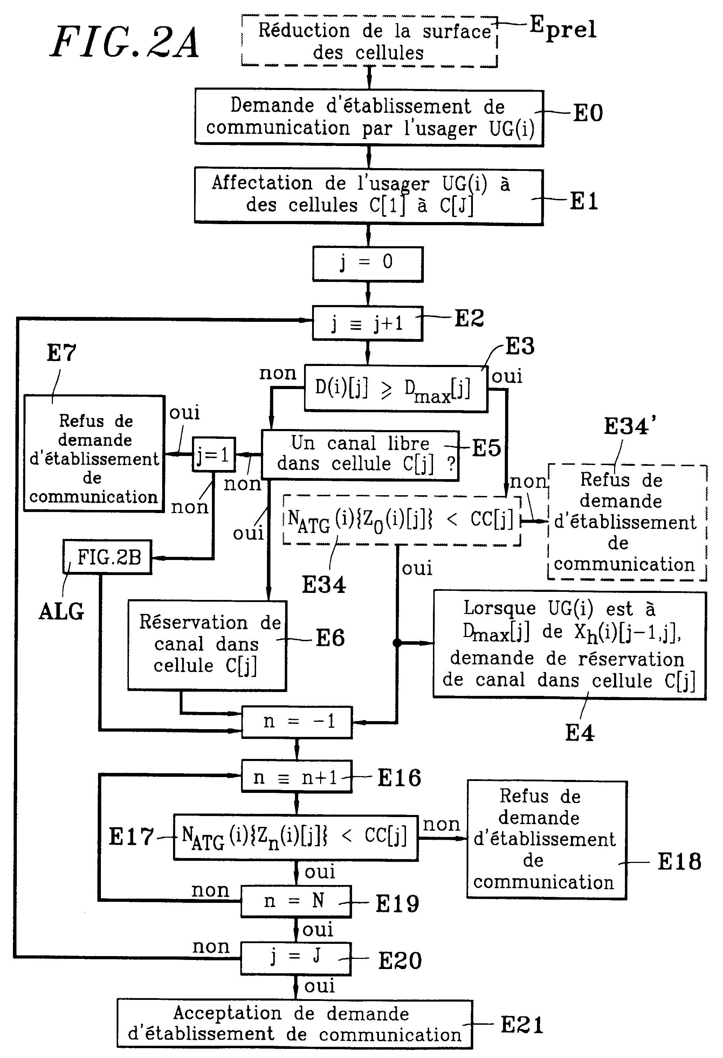

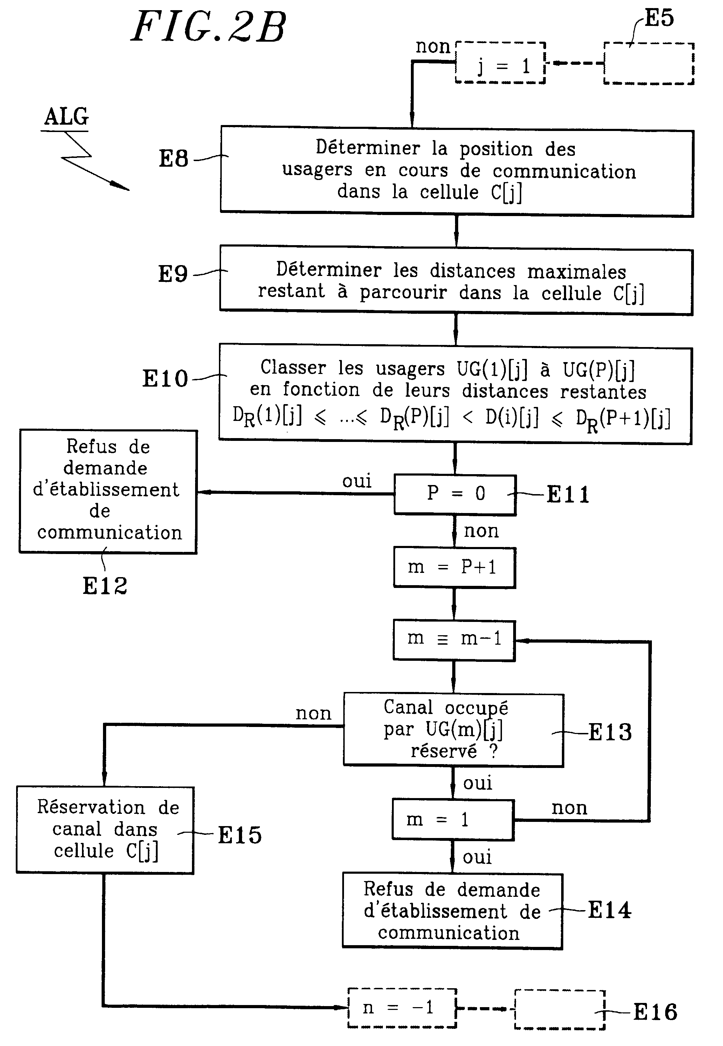

Les figures 2A et 2B montrent un algorithme du procédé conforme à l'invention mis en oeuvre pour un usager ayant souscrit au service ATG, dénommé ci-après "usager ATG". L'algorithme est implanté en partie dans une station terrienne de commande SC ou dans un satellite de la constellation, et en partie dans le terminal de l'usager ATG.

L'algorithme comprend notamment, selon une première réalisation, une étape initiale E1, une étape de demande de réservation de canal E4 et des étapes de réservation de canal E6 et E15, des étapes de test E3, E5, E13 et E17, et des étapes finales d'acceptation de demande d'établissement de communication E21 ou de refus de demande d'établissement de communication E7, E12, E14 et E18.

L'étape E1, qui succède à une demande d'établissement de communication émise par le terminal de l'usager UG(i) à une étape E0, consiste à déterminer préalablement les cellules auxquelles l'usager UG(i) sera affecté pendant une communication consécutive à la demande d'établissement de communication précitée. En effet, les cellules présentent entre elles des zones de chevauchement dans lesquelles les usagers peuvent être affectés à plusieurs cellules différentes en un point donné de leur trajectoire, c'est-à-dire dans lesquelles les usagers peuvent utiliser des canaux de communication de plusieurs cellules. L'étape E1 a pour rôle d'affecter préalablement l'usager UG(i) à un groupe de cellules successivement traversées par sa trajectoire T (i) en minimisant le nombre de transferts de l'usager d'une cellule à l'autre à réaliser. L'étape E1 est détaillée ci-après en référence à la figure 3A.

La figure 3A montre, à titre d'exemple, les contours de cellules adjacentes C1 à C5 rattachés à un ou plusieurs satellites d'une même orbite, et la trajectoire T(i) de l'usager UG(i) au travers des cellules C1 à C5. Ces cellules sont typiquement de formes et de tailles différentes et présentent entre elles des zones de chevauchement signalées par des hachures dans la figure 3A. L'affectation de l'usager UG(i) aux cellules est choisie selon trois critères CR1, CR2 et CR3.

Le premier critère CR1 impose à l'usager, lorsqu'il est affecté à une cellule donnée, de rester le plus longtemps possible affecté à la cellule donnée et n'être transféré dans une cellule suivante, c'est-à-dire commencer à utiliser un canal de la cellule suivante, que lorsque l'usager a atteint la limite de ladite cellule donnée. Ainsi, à la figure 3A, l'usager UG(i) effectuant une demande d'établissement de communication en un point X-(i) dans la cellule C1 reste affecté à cette cellule jusqu'en un point de transfert P1 situé à l'intersection de la trajectoire T(i) et du contour de la cellule C1.

Selon le second critère CR2, lorsque l'usager en sortie d'une cellule pénètre dans une zone de chevauchement de plusieurs cellules, il est affecté à la cellule dans laquelle il peut parcourir la plus grande distance, c'est-à-dire dans laquelle le temps de passage de l'usager est le plus long. Dans l'exemple illustré, l'usager UG(i), une fois sorti de la cellule C1, entre dans une zone de chevauchement entre les cellules C2 et C3. L'usager est alors transféré dans la cellule C2, et non pas dans la cellule C3, et reste affecté à la cellule C2 jusqu'en un point de transfert P2 d'intersection entre la trajectoire T(i) et le contour de la cellule C2. Ce second critère CR2 est appliqué également pour le choix de la première cellule d'affectation lorsque le point $X_0(i)$ se situe dans une zone de chevauchement. Selon le troisième critère CR3, lorsque l'usager UG(i) peut être affecté à plusieurs cellules chevauchantes en un point de la trajectoire T(i) et les distances qu'il peut parcourir dans ces cellules chevauchantes sont égales, comme illustré par les cellules C4 et C5 à la figure 3A, l'usager est affecté à la cellule parmi lesdites cellules chevauchantes à laquelle est attribuée la plus grande capacité en canaux de communication, quels que soient les états libres ou occupés de ces canaux.

Ce processus d'affectation est poursuivi jusqu'en un point limite $P_L(i)$ de la trajectoire T(i) situé à la distance $L_\tau(i)$ de $X_0(i)$. En pratique toutefois, les cellules ne se chevauchent le plus souvent que deux-à-deux. Dans ce cas le second critère n'est utilisé que pour déterminer la première cellule d'affectation.

La figure 3B montre seulement les cellules auxquelles l'usager est successivement affecté le long de la trajectoire T(i) qui seront désignées par C[1] à C[J] respectivement dans la suite de la description, la dernière cellule C[J] contenant le point limite $P_L(i)$ précité. J est un entier dépendant de la distance prédéterminée $L_\tau(i)$ et donc de la durée prédéterminée $\tau(i)$ et désignant le nombre maximal de cellules pour lesquelles le procédé conforme à l'invention est appliqué à l'usager UG(i).

Afin de mieux comprendre le déroulement de l'algorithme conforme à l'invention, on définit les notations suivantes dont certaines sont illustrées aux figures 3B, 4 et 5 :

- $X_h(i)[j-1,j]$ : point de transfert de la communication de l'usager UG(i) de la cellule C[j-1] vers la cellule C[j], dit également point de transfert de l'usager UG(i) dans la cellule C[j]. Ce point est déterminé à l'étape E1.

Pour la première cellule C[1] à laquelle l'usager UG(i) est affecté, le point de transfert $X_h(i)[0,1]$ est égal à $X_0(i)$.

Un point de transfert $X_h(i)[J,J+1]$ vers une cellule succédant à la cellule C[J] est en outre défini selon le critère CR1, comme montré à la figure 3B.

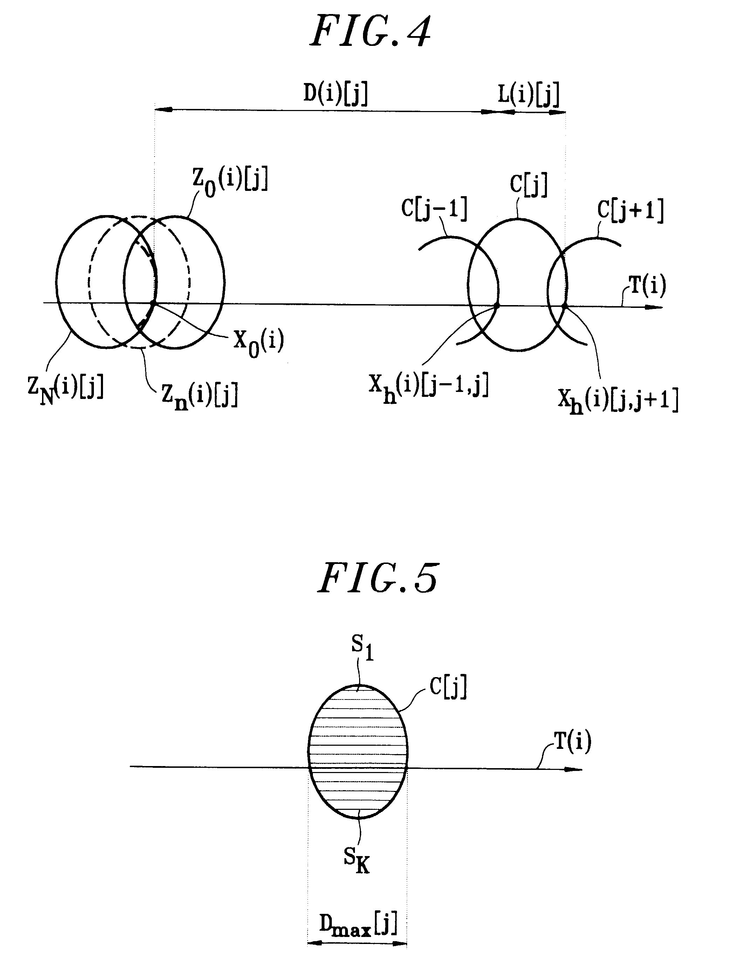

- D(i)[j] : distance séparant l'usager UG(i) de son point de transfert $X_h(i)[j-1,j]$ dans la cellule C[j] lors de la demande d'établissement de communication, comme montré à la figure 4. Cette distance est égale à $X_h(i)[j-1,j] - X_0(i)$ lorsque l'usager UG(i) est en dehors de la cellule C[j] à l'instant de la demande d'établissement de communication, et à 0 si celui-ci est déjà sur le contour ou à l'intérieur de la cellule C[j] à ce même instant.

- L(i)[j] : longueur du parcours de l'usager UG(i) dans la cellule C[j] le long de la trajectoire T(i), comme montré à la figure 4. Cette longueur est égale à $X_h(i)[j,j+1] - X_h(i)[j-1, j]$.

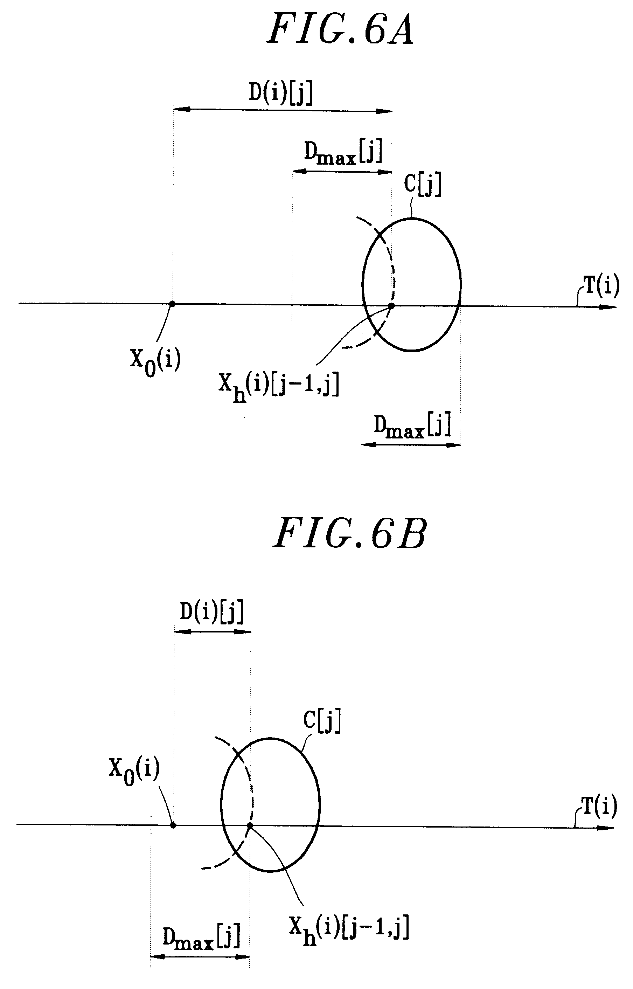

- $D_{max}[j]$ : distance maximale que peut parcourir un usager dans la cellule C[j]. Cette distance montrée à la figure 5, est égale à la longueur maximale de la cellule C[j] parallèlement à la trajectoire T(i), et est préalablement déterminée en calculant la longueur maximale de K segments $S_I$ à $S_K$ parallèles à la trajectoire T(i) inclus dans la cellule C[j] et délimités par le contour de cette cellule.

- $Z_0(i)[j]$ : zone montrée à la figure 4, obtenue par translation de la cellule C[j] suivant une direction opposée à celle de la trajectoire T(i), c'est-à-dire suivant la direction de déplacement des satellites relativement à la terre, de la distance D(i)[j]. Cette zone, avec son contour, inclut le point $X_0(i)$.

- $Z_n(i)[j]$ : zone montrée à la figure 4, obtenue par translation de la cellule C[j] suivant une direction opposée à celle de la trajectoire T(i) de la distance D(i)[j] + ($\frac{n}{N}$ x L(i)[j]), où n et N sont des entiers tels que $n \le N$. Cette zone contient le point $X_0(i)$.

- $Z_N(i)[j]$ : zone montrée à la figure 4, obtenue par translation de la cellule C[j] suivant une direction opposée à celle de la trajectoire T(i) de la distance D(i)[j] + L(i)[j] = D(i)[j+1]. L'usager UG(i) se trouve à la sortie de cette zone, sur son contour, lors de la demande d'établissement de communication.

- $N_{ATG}(i) \{Z_n(i)[j]\}$ : nombre d'usagers ATG présents et en cours de communication dans la zone $Z_n(i)[j]$, où n = 0 à N, et bénéficiant du service ATG pour leur transfert dans la cellule C[j], au moment de la demande d'établissement de communication de l'usager UG(i).

- CC[j] : capacité en canaux de communication de la cellule C[j], c'est-à-dire nombre de canaux attribués à cette cellule, lorsque cette capacité est constante. Si cette capacité est variable dans le temps, par exemple si la constellation est un système à allocation dynamique de canaux, CC[j] désigne la capacité maximale pouvant être attribuée à la cellule C[j]. Le nombre $N_{ATG}(i) \{Z_n(i)[j]\}$ est toujours inférieur ou égal à CC[j].

- W[j] : mémoire tampon recevant des demandes de réservation de canal d'usagers ATG pour la cellule C[j].

En référence de nouveau à la figure 2A, pour chaque cellule C[j] déterminée par j = 1 à J (étape E2), que l'usager UG(i) est susceptible de traverser pendant une communication, la distance D(i)[j] séparant l'usager UG(i) de son point de transfert $X_h(i)[j-1,j]$ dans la cellule C[j] à l'instant de la demande d'établissement de communication est comparée à $D_{max}[j]$ à l'étape de test E3. Si l'usager UG(i) se trouve à cet instant à une distance de son point de transfert dans la cellule C[j] supérieure ou égale à $D_{max}[j]$ comme illustré à la figure 6A, alors l'algorithme passe à l'étape E4 et à l'étape E16 simultanément. A l'étape E4, s'il n'est pas à la distance $D_{max}[j]$ de son point de transfert $X_h(i)[j-1,j]$ dans la cellule C[j], le terminal de l'usager UG(i) attend de s'y trouver pour effectuer une demande de réservation d'un canal dans cette cellule. L'information de position est fournie au terminal par la station terrienne de commande SC sous forme d'un message de signalisation transmis dans un canal de signalisation d'un faisceau montant de la station de commande SC ou d'une station relais recevant ce message de la station de commande SC, vers le satellite en visibilité de l'usager UG(i) et du satellite vers le terminal de l'usager UG(i) dans un canal de signalisation d'un faisceau descendant. Le terminal de l'usager UG(i) attend ainsi le message de signalisation précité pour effectuer sa demande de réservation de canal. En variante, la station de commande SC effectue la demande de réservation de canal dans la cellule C[j] pour le terminal de l'usager UG(i).

Dans ces conditions, à l'instant où l'usager UG(i) sera transféré dans la cellule C[j], c'est-à-dire atteindra le point de transfert $X_h(i)[j-1,j]$, tous les usagers, ATG ou non-ATG, en cours de communication dans la cellule C[j] lors de la demande de réservation de canal de l'usager UG(i) auront quitté la cellule C[j] et ne seront donc plus affectés à celle-ci.

La demande de réservation de canal de l'usager UG(i) est placée dans la mémoire tampon W[j] associée à la cellule C[j]. Suite à chaque écriture de demande de réservation de canal dans la mémoire W[j], un canal est réservé dans la cellule C[j]. Le canal qui est réservé est soit un canal libre, c'est-à-dire non-occupé et non-réservé, soit un canal occupé par le terminal d'un usager quelconque mais non déjà réservé. De préférence, le canal qui est réservé est un canal occupé, de façon à laisser des canaux libres pour satisfaire d'éventuelles demandes d'établissement de communication ultérieures par d'autres terminaux dans cette cellule.

Les demandes de réservation de canal contenues dans la mémoire W[j] sont organisées en fonction de distances séparant les usagers correspondants de leurs points de transfert dans la cellule C[j]. Ainsi, pour écrire la demande de réservation de canal de l'usager UG(i) dans la mémoire W[j], la distance D(i)[j] est comparée aux distances entre les usagers correspondant aux demandes de réservation de canal déjà incluses dans la mémoire W[j] et leurs points de transfert respectifs dans la cellule C[j] lors de la demande d'établissement de communication de l'usager UG(i). La demande de réservation de l'usager UG(i) est alors écrite immédiatement derrière celle d'un usager UG⁺(i) dont la distance le séparant de son point de transfert dans la cellule C[j] lors de la demande d'établissement de communication de l'usager UG(i) est inférieure à la distance D(i)[j], et immédiatement devant celle d'un usager UG⁻(i) dont la distance le séparant de son point de transfert dans la cellule C[j] au même instant est supérieure à la distance D(i)[j]. Les demandes de réservation de canal des usagers UG⁺(i), UG(i) et UG⁻(i) sont successivement lues dans la mémoire W[j] lorsque ces usagers atteignent leurs points de transfert dans la cellule C[j]. Un canal réservé leur est alors alloué.

La mémoire W[j] ne contient que des demandes de réservation de canal dans la cellule C[j] émises par des terminaux d'usager ATG bénéficiant du service ATG pour le transfert dans la cellule C[j]. En effet, comme déjà précisé, chaque usager ATG UG(i) ne bénéficie du service ATG que pendant une durée prédéterminée τ(i) correspondant à une distance prédéterminée $L_τ(i)$ et donc à un nombre de cellules prédéterminé J sur la trajectoire T(i). Au-delà de la distance prédéterminée $L_τ(i)$, les transferts de l'usager, ou de ses communications, d'une cellule à l'autre ne sont plus garantis par le procédé conforme à l'invention. Le terminal de l'usager doit alors émettre une demande d'allocation de canal dans chaque cellule de façon classique comme tout terminal d'usager ordinaire non-ATG à chaque fois que, par exemple, la puissance du signal qu'il reçoit dans la cellule où il est affecté devient inférieure à un seuil prédéterminé.

Les demandes de réservation de canal d'usagers ATG incluses dans la mémoire W[j] sont prioritaires par rapport à toute demande d'établissement de communication. Ainsi, lorsqu'un terminal d'usager quelconque effectue une demande d'établissement de communication dans la cellule C[j], il est nécessaire, pour que la demande soit acceptée, qu'il existe un canal libre, c'est-à-dire un canal non-réservé qui n'est pas occupé, dans cette cellule, et qu'un nombre de canaux égal au nombre de demandes de réservation de canal dans la mémoire W[j] aient été réservés pour les usagers ATG correspondants.

Si, à l'étape E3 de l'algorithme de la figure 2A, la distance $D(i)[j]$ est inférieure à $D_{max}[j]$, comme illustré à la figure 6B, on vérifie à l'étape E5 s'il existe un canal de communication libre dans la cellule $C[j]$.

S'il existe au moins un canal libre dans cette cellule, une réservation de ce canal est effectuée immédiatement par/pour le terminal de l'usager UG(i) à l'étape E6, et l'algorithme passe ensuite à l'étape E16.

Si aucun canal n'est libre dans la cellule $C[j]$, et si $C[j]$ est la première cellule $C[1]$, dans laquelle l'usager UG(i) se trouve lors de sa demande d'établissement de communication, l'algorithme est arrêté à l'étape E7. La demande d'établissement de communication de l'usager UG(i) est alors refusée.

Si la cellule $C[j]$ est une cellule autre que la première cellule $C[1]$ et si aucun canal n'est libre dans cette cellule, un sous-algorithme ALG montré à la figure 2B est mis en oeuvre.

Le sous-algorithme ALG comprend principalement des étapes E8 à E15. A l'étape E8, la position de tous les usagers, ATG ou non-ATG, en cours de communication dans la cellule $C[j]$ est déterminée. Leur position peut être déterminée de façon classique, grâce notamment à l'émission régulière par le terminal de chaque usager de messages de signalisation au système de télécommunications cellulaire, ou bien de manière plus précise par calcul de temps de propagation et d'effets Doppler, comme décrit dans l'article de W. Zhao et al., intitulé "a UT Positioning Approach for Dynamic Satellite Constellations" publié dans "Proceedings of the fourth International Mobile Satellite Conference 1995", Ottawa, Canada, 6-8 juin 1995, pages 35 à 41.

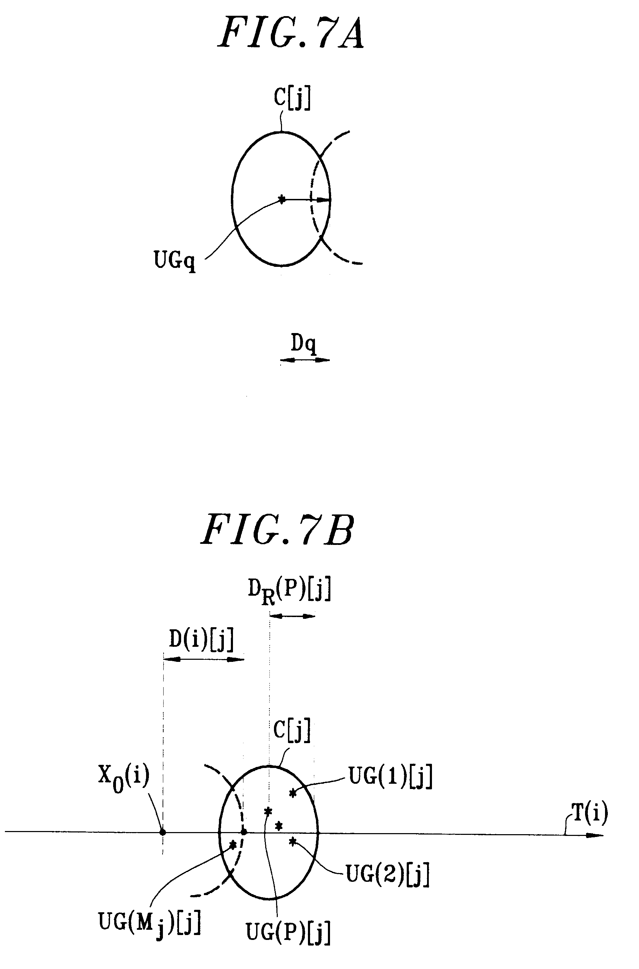

A l'étape suivante E9, la distance maximale restant à parcourir dans la cellule $C[j]$ par chaque usager en cours de communication dans cette cellule est calculée. Comme montré à la figure 7A pour un usager quelconque $UGq$ du système de télécommunications cellulaire, cette distance maximale restante est définie par la distance $Dq$ séparant lors de la demande d'établissement de communication par l'usager UG(i) l'usager quelconque $UGq$ du contour de la cellule $C[j]$ suivant la trajectoire relative de l'usager $UGq$ dans le référentiel $R_S$, lié aux satellites, c'est-à-dire suivant une direction opposée au défilement des satellites par rapport à la surface de la terre. Si l'usager quelconque $UGq$ est un usager ATG, la distance restante $Dq$ correspond à la distance entre sa position lors de ladite demande d'établissement de communication et son point de transfert dans la cellule $C[j+1]$ succédant à la cellule $C[j]$. Si l'usager quelconque $UGq$ est un usager non-ATG, la distance restante $Dq$ est la distance maximale qu'il est encore susceptible de parcourir dans la cellule $C[j]$, étant donné que son transfert éventuel dans une cellule suivante peut intervenir avant la limite de la cellule $C[j]$.

A l'étape E10, les usagers en cours de communication dans la cellule $C[j]$ sont classés dans une liste par ordre croissant de leurs distances restantes respectives. Les usagers classés, désignés par $UG(1)[j]$ à $UG(M_j)[j]$ à la figure 7B, où M est un entier égal au nombre total d'usagers en cours de communication dans la cellule $C[j]$ lors de la demande d'établissement de communication par l'usager UG(i), ont ainsi des distances restantes respectives $D_R(1)[j]$ à $D_R(M_j)[j]$ telles que $D_R(1)[j] \leq D_R(2)[j] \leq ... \leq D_R(M_j)[j]$. En outre chaque distance restante $D_R(m)[j]$, où $m = 1$ à $M_j$ est comparée à la distance $D(i)[j]$ séparant l'usager UG(i) de son point de transfert $X_h(i)[j-1,j]$ dans la cellule $C[j]$. La liste de classement des usagers est ensuite tronquée à partir d'un usager $UG(P+1)[j]$, où $1 \leq P \leq M_j-1$, pour lequel la distance restante $D_R(P+1)[j]$ est supérieure ou égale à la distance $D(i)[j]$, c'est-à-dire seuls les P premiers usagers $UG(1)[j]$ à $UG(P)[j]$ ayant des distances restantes respectives inférieures à la distance $D(i)[j]$ restent inscrits dans la liste.

A l'étape E11, si l'entier P est égal à 0, c'est-à-dire si aucune distance restante n'est inférieure à la distance $D(i)[j]$, la demande d'établissement de communication de l'usager UG(i) est refusée à l'étape E12 et toutes les réservations de canal ou demandes de réservation de canal concernant l'usager UG(i) effectuées pour les cellules $C[1]$ à $C[j-1]$ précédant la cellule $C[j]$ suivant la trajectoire T(i) sont annulées. En effet, il n'est pas assuré qu'un canal sera libéré dans la cellule $C[j]$ avant l'arrivée de l'usager UG(i) à son point de transfert dans cette cellule.

Si à l'étape E11 l'entier P est au moins égal à 1, alors il est vérifié itérativement pour chaque usager $UG(P)[j]$, $UG(P-1)[j]$, ..., $UG(1)[j]$ respectivement à l'étape E13 si le canal de communication occupé par cet usager dans la cellule $C[j]$ est réservé. Si les canaux occupés par les usagers $UG(P)[j]$ à $UG(1)[j]$ sont déjà tous réservés, par des usagers ATG, alors la demande d'établissement de communication de l'usager UG(i) est refusée à l'étape E14 et toutes les réservations et demandes de réservation effectuées par/pour l'usager UG(i) dans les cellules $C[1]$ à $C[j-1]$ précédant la cellule $C[j]$ sont annulées.

Si en revanche il existe au moins un canal de communication occupé par l'un des usagers $UG(P)[j]$ à $UG(1)[j]$ qui soit non-réservé, ce canal est réservé à l'étape E15. Une demande de réservation de canal par/pour le terminal de l'usager UG(i) est alors écrite dans la mémoire tampon $W[j]$ associée à la cellule $C[j]$ de la même manière que décrit précédemment. Lorsque la demande de réservation de canal de l'usager UG(i) est écrite dans la mémoire $W[i]$, il est garanti qu'un canal alors occupé par un usager quelconque dans la cellule $C[j]$ sera libéré et pourra être alloué à l'usager UG(i) lorsqu'il atteindra son point de transfert $X_h(i)[j-1,j]$.

Après la mise en oeuvre de l'étape E15, l'algorithme conforme à l'invention est continué aux étapes E16 à E21 représentées à la figure 2A.

Les étapes E16 à E19 constituent une boucle de test itérative. Dans chaque zone $Z_n(i)[j]$ (n=0 à N), obtenue par translation de la cellule C[j] comme déjà indiqué et incluant le point $X_0(i)$, on compare à l'étape E17 le nombre $N_{ATG}(i)\{Z_n(i)[j]\}$ d'usagers ATG déjà en cours de communication et bénéficiant du service ATG pour leur transfert dans la cellule C[j], à la capacité en canaux de communication CC[j] de la cellule C[j].

Si, à l'étape E17, le nombre d'usagers ATG précité est égal à la capacité CC[j] de la cellule C[j], l'algorithme est arrêté à l'étape E18, la demande d'établissement de communication de l'usager UG(i) est refusée et toutes les réservations et demandes de réservation de canal concernant l'usager UG(i) effectuées pour les cellules C[1] à C[j] sont annulées.

Si le nombre $N_{ATG}(i)\{Z_n(i)[j]\}$ est inférieur à la capacité CC[j] de la cellule C[j] et l'entier n est inférieur à N à l'étape E19, l'entier n est incrémenté à l'étape E16 de façon à appliquer l'étape E17 à la zone $Z_{n+1}(i)$ [j] puis de façon itérative jusqu'à la zone $Z_N(i)[j]$ si le résultat des étapes E17 est toujours positif.

Si aucun arrêt de l'algorithme ne survient à l'étape E18, le cycle incluant les étapes E2 à E19 est recommencé à l'étape E20 pour une cellule suivante C[j+1]. Si pour la cellule C[J], dernière cellule pour laquelle l'usager UG(i) a droit au service ATG, la condition de l'étape E17 est vérifiée, la demande d'établissement de communication de l'usager UG(i) est acceptée à l'étape E21. On est en effet certain à cet instant que ni la communication de l'usager UG(i) ni les communications des autres usagers ATG déjà acceptées ne seront interrompues lors du transfert de l'usager UG(i) d'une cellule à l'autre pendant la durée prédéterminée $\tau(i)$, puisque dans chaque cellule où l'usager UG(i) sera transféré, le nombre total d'usagers ATG en cours de communication dans cette cellule ne dépassera en aucun cas la capacité de celle-ci.

De préférence, dans le cas où la condition de l'étape E3 est vérifiée pour le transfert de l'usager UG(i) dans une cellule C[j], c'est-à-dire si $D(i)[j] \geq D_{max}[j]$, les étapes E4 et E16 ne sont mises en oeuvre que si, à une étape E34, le nombre $N_{ATG}(i)\{Z_0(i)[j]\}$ d'usagers ATG en cours de communication dans la zone $Z_0(i)[j]$ à l'instant de la demande d'établissement de communication du terminal de l'usager UG(i) et bénéficiant du service ATG pour leur transfert dans la cellule C[j] est inférieur à la capacité CC[j] de la cellule C[j]. Si le nombre $N_{ATG}(i)\{Z_0(i)[j]\}$ est égal à CC[j], l'algorithme est arrêté l'étape E34', la demande d'établissement de communication de l'usager UG(i) est refusée et toutes les réservations et demandes de réservation de canal précédemment effectuées pour l'usager UG(i) sont annulées.

Selon une seconde réalisation de l'invention, une étape préliminaire $E_{prel}$ est prévue pour réduire la surface des cellules rattachées aux satellites de la constellation, initialement délimitées par des contours correspondant à un paramètre radioélectrique constant, comme déjà indiqué.

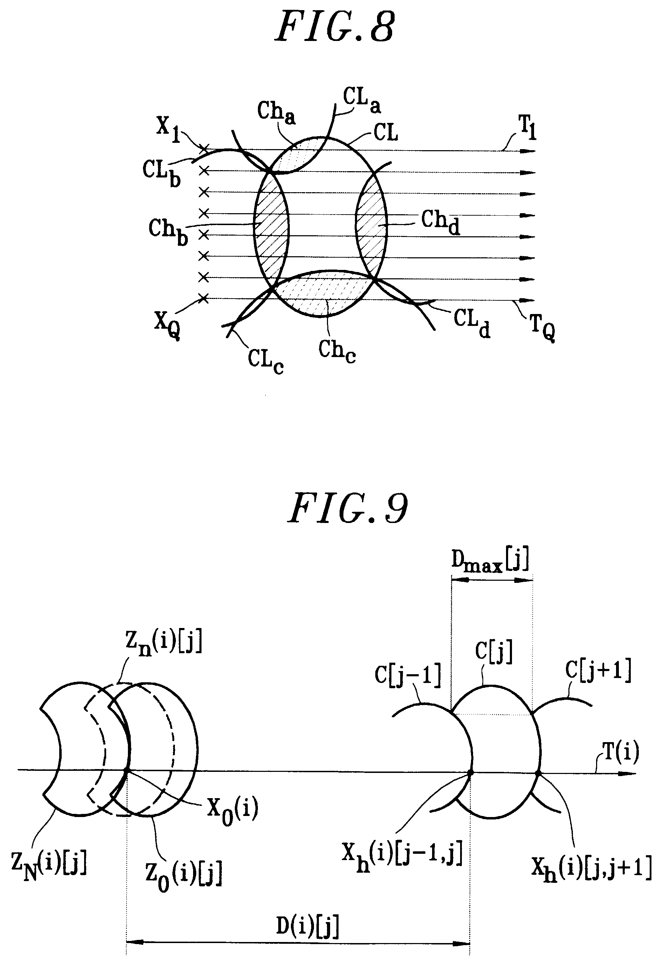

La figure 8 montre comment est réduite la surface d'une cellule quelconque CL. Pour chaque usager d'une pluralité d'usagers fictifs se déplaçant suivant des trajectoires parallèles $T_1$ à $T_Q$ dans le référentiel lié aux satellites $R_S$, et traversant complètement au moins la cellule CL, les trois critères CR1, CR2 et CR3 définis précédemment sont appliqués afin d'affecter cet usager successivement à des cellules de la même manière que celle déjà décrite en référence à la figure 3A relative à l'étape E1 de l'algorithme. Les trajectoires $T_1$ à $T_Q$ sont choisies d'une part de façon à balayer l'ensemble de la cellule CL et d'autre part de sorte que leurs points initiaux respectifs $X_1$ à $X_Q$ soient chacun situés hors d'une zone de chevauchement. Dans chaque zone de chevauchement $Ch_a$ à $Ch_d$ entre la cellule CL et des cellules avoisinantes $CL_a$ à $CL_d$, s'il est trouvé qu'aucun usager fictif se trouvant dans cette zone le long de sa trajectoire n'est affecté à la cellule CL selon les trois critères précités, alors la zone de chevauchement est supprimée dans la cellule CL. Dans l'exemple illustré, les zones de chevanchement $Ch_a$ et $Ch_b$ sont supprimées puisque tous les usagers fictifs traversant ces zones ne sont transférés dans la cellule CL qu'après avoir atteint la limite des cellules $CL_a$ et $CL_b$ en vertu du premier critère CR1. Les zones $Ch_a$ et $Ch_b$ sont exclusivement attribuées aux cellules $CL_a$ et $CL_b$ respectivement. De même, la zone $Ch_d$ est attribuée exclusivement à la cellule CL. Par contre, la zone $Ch_c$ est maintenue comme zone de chevauchement dans les cellules CL et $CL_c$.

Toutes les étapes E1 à E21, E34 et E34' de l'algorithme des figures 2A et 2B sont mises en oeuvre de la même manière que dans la première réalisation. Les cellules C[1] à C[J] correspondant à l'usager UG(i) sont selon cette seconde réalisation des cellules dont la surface a été préalablement réduite, comme montré à la figure 9 dans laquelle les mêmes notations qu'aux figures 3B à 6B sont utilisées à des fins de simplification. La distance prédéterminée $D_{max}[j]$ associée à la cellule réduite C[j] est déterminée préalablement d'une façon identique à celle décrite précédemment en référence à la figure 5 par le calcul du plus long parcours possible d'un usager dans cette cellule.

A l'étape E1, toutefois, lorsque l'usager UG(i) se trouve dans une zone de chevauchement de plusieurs cellules lors de sa demande d'établissement de communication, comme par exemple la zone de chevauchement Ch montrée à la figure 8, la première cellule à laquelle il est affecté n'est pas déterminée selon le critère CR2 précité, mais est celle, parmi lesdites plusieurs cellules, atteinte la première par la trajectoire T(i). De cette manière, dans toutes les zones supprimées d'une cellule, on est certain qu'aucun usager ATG susceptible d'être présent dans l'une de ces zones ne sera affecté à cette cellule.

Aux étapes E17 et E34 de l'algorithme de la figure 2A, les nombres d'usagers ATG $N_{ATG}(i)\{Z_n(i)[j]\}$ (n = 0 à N) sont déterminés dans des zones $Z_n(i)[j]$ de tailles réduites, ce qui diminue le temps de calcul et surtout permet d'éviter de prendre en compte dans chaque zone $Z_n(i)[j]$ des usagers ATG qui ne seront pas affectés à la cellule C[j] correspondante simultanément avec l'usager UG(i). La probabilité de refus de demande d'établissement de communication aux étapes E18 et E34' est ainsi réduite par rapport à la première réalisation de l'invention.

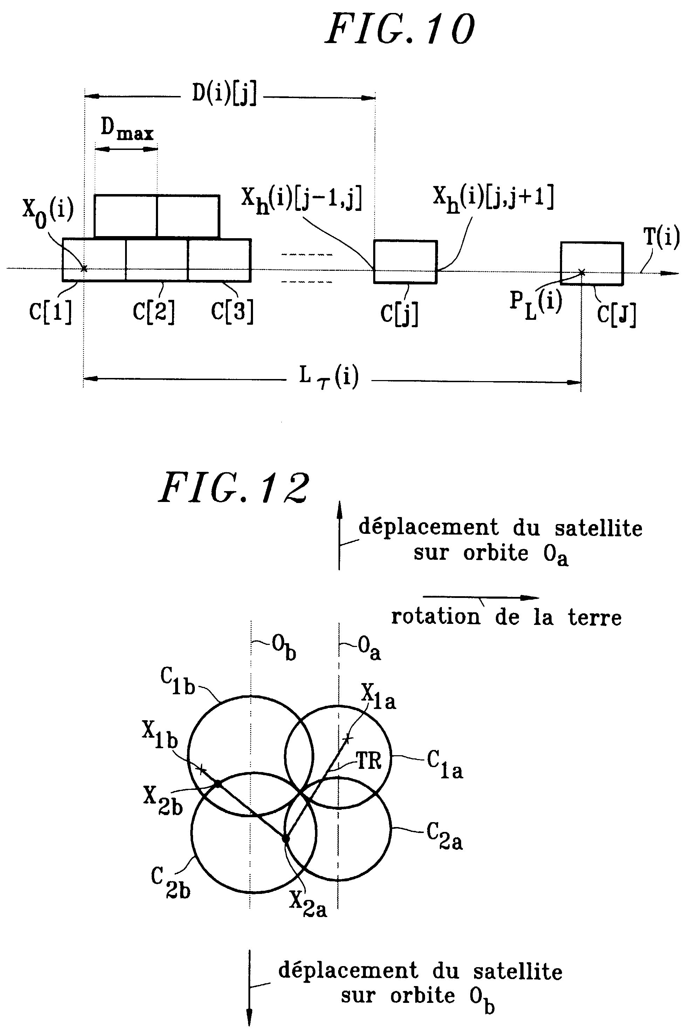

Selon une troisième réalisation de l'invention, les cellules rattachées aux satellites sont toutes identiques, de même forme rectangulaire et de même capacité en canaux de communication CC. Les cellules sont en outre jointives et alignées suivant la direction de déplacement des satellites relativement à la surface de la Terre, c'est-à-dire deux côtés des cellules sont parallèles à cette direction de déplacement. La figure 10 illustre ce cas particulier, dans lequel l'usager UG(i) parcourt la même distance dans chacune des cellules suivant sa trajectoire T(i), c'est-à-dire son temps de passage est le même dans chaque cellule. La distance maximale prédéterminée, désignée ici par $D_{max}$, est la même pour toutes les cellules et est égale à la longueur des côtés du rectangle parallèles à la trajectoire T(i).

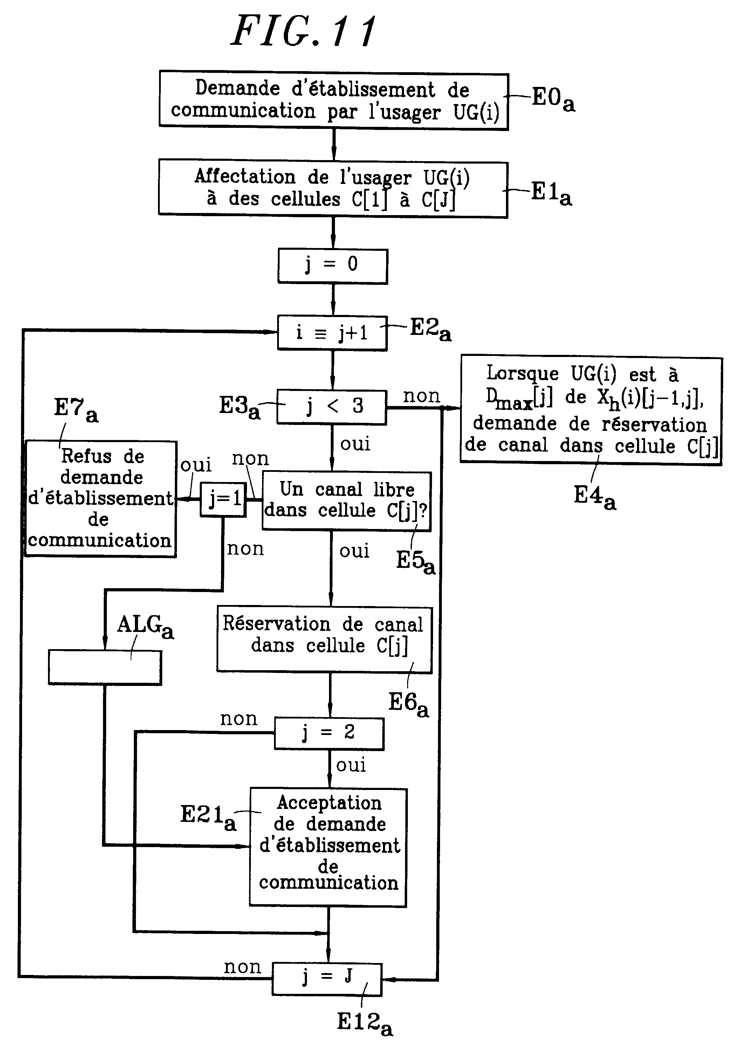

En référence à la figure 11, dans laquelle les mêmes notations que dans les figures 2 à 9 sont utilisées dans un but de simplification, l'algorithme selon cette troisième réalisation est simplifié par rapport à l'algorithme conforme à la première réalisation montré à la figure 2A.

A l'étape $E1_a$ d'affectation de l'usager à des cellules, les cellules C[1] à C[J] auxquelles l'usager UG(i) est affecté sont les J premières cellules traversées, même partiellement, par la trajectoire T(i), l'entier J dépendant, comme décrit précédemment, de la durée $\tau(i)$ préalablement définie par l'usager UG(i). Les trois critères CR1 à CR3 utilisés dans la première réalisation ne sont pas appliqués dans cette troisième réalisation. L'étape de test E34 associée à l'étape de refus de demande d'établissement de communication E34' et les étapes E16 à E19 sont supprimées dans la troisième réalisation.

Dans chacune des deux premières cellules C[1] et C[2] traversées par la trajectoire T(i) de l'usager UG(i) (étapes $E2_a$ et $E3_a$), la cellule C[1] incluant le point initial $X_0(i)$, on vérifie à l'étape $E5_a$ s'il existe au moins un canal de communication libre.

Si à l'étape $E5_a$ il existe un canal libre, une réservation de ce canal est effectuée par/pour le terminal de l'usager UG(i) à l'étape $E6_a$. Si la condition de l'étape $E5_a$ est vérifiée pour les deux cellules C[1] et C[2], la demande d'établissement de communication est acceptée à l'étape $E21_a$.

Si aucun canal n'est disponible dans la première cellule C[1], la demande d'établissement de communication est refusée à l'étape $E7_a$, de la même manière qu'à l'étape E7.

S'il existe un canal libre dans la première cellule C[1] mais pas dans la seconde cellule C[2], alors un sous-algorithme $ALG_a$, identique au sous-algorithme ALG de la figure 2B, est mis en oeuvre pour la cellule C[2]. Si dans une étape du sous-algorithme $ALG_a$ identique à l'étape E13 de la figure 2B, il existe un canal dans la cellule C[2] occupé par un usager quelconque qui quittera cette cellule avant que l'usager UG(i) n'y soit affecté et qui soit non-réservé, alors ce canal est réservé comme à l'étape E15 et la demande d'établissement de communication est acceptée.

Pour chacune des cellules suivantes C[j] avec $3 \leq j \leq N$, l'usager UG(i) attend de se trouver à la distance $D_{max}$ de la cellule, c'est-à-dire du point d'entrée $X_h(i)[j-1,j]$ dans la cellule, pour effectuer une demande de réservation de canal. Ainsi, à chaque transfert de l'usager UG(i) dans la cellule C[j], une demande de réservation de canal est émise dans la cellule suivante C[j+1].

La description ci-dessus a été produite pour des cellules rattachées à des satellites placés sur une même orbite. La présente invention s'applique aussi dans le cas où l'usager UG(i) traverse des cellules rattachées à des satellites d'orbites différentes, parallèles ou concourantes et par exemple sécantes de l'équateur après projection sur la surface terrestre.

La figure 12 montre, à titre d'exemple, deux cellules $C_{1a}$ et $C_{2a}$ rattachées à un ou deux satellites se déplaçant sur une orbite $O_a$, et deux cellules $C_{1b}$, $C_{2b}$ rattachées à un ou deux satellites se déplaçant dans le sens inverse des cellules $C_{1a}$ et $C_{2a}$ sur une orbite $O_b$ adjacente à l'orbite $O_a$. Pour un usager quelconque UG se trouvant initialement en un point $X_{1a}$ dans la cellule $C_{1a}$ lors d'une demande d'établissement de communication effectuée par le terminal de celui-ci, une trajectoire fictive TR est définie. La trajectoire TR, déterminée selon les trois critères CR1 à CR3, comprend une première portion rectiligne $X_{1a}X_{2a}$ suivant une direction opposée à la direction du déplacement relatif des satellites sur l'orbite $O_a$ par rapport à la surface de la Terre, dont le point d'extrémité $X_{2a}$ est situé sur le contour de la cellule $C_{2a}$. Une seconde portion rectiligne $X_{2a}X_{1b}$ de la trajectoire TR est dirigée suivant une direction opposée à la direction du déplacement relatif des satellites sur l'orbite $O_b$ par rapport à la surface de la Terre.

L'algorithme des figures 2A et 2B est appliqué à l'usager UG comme décrit ci-dessus. Toutes les distances sont toutefois prises le long de sa trajectoire brisée TR, et les translations de cellules sont effectuées en suivant également la trajectoire TR. Ainsi, la longueur de la trajectoire TR, égale à la somme des longueurs des portions $X_{1a}X_{2a}$ et $X_{2a}X_{1b}$, est la longueur prédéterminée maximale définie à l'avance par l'usager UG. La distance, par exemple, séparant l'usager UG lors de la demande d'établissement de communication de son point de transfert dans la cellule $C_{1b}$, désigné par $X_{2b}$, est égale à la somme des longueurs des portions $X_{1a}X_{2a}$ et $X_{2a}X_{2b}$.

**Revendications**

1. Procédé de transfert de communications d'usagers prédéterminés (UG(i)) dans un système de télécommunications cellulaire à constellation de satellites non-géostationnaires avec cellules rattachées aux satellites, lesdites cellules (CL1, CL2), auxquelles des canaux de communication sont respectivement associés, ayant des contours respectifs prédéterminés et se déplaçant relativement à la surface de la Terre suivant une direction prédéterminée, la vitesse des usagers prédéterminés par rapport à la surface de la Terre étant négligée devant la vitesse de déplacement des cellules, la position des usagers prédéterminés ($X_0(i)$) étant connue lors de chacune des demandes d'établissement de communication émises par des terminaux des usagers prédéterminés,

comprenant pour un usager donné (UG(i)) parmi lesdits usagers prédéterminés après une demande d'établissement de communication émise par le terminal de celui-ci et pour chaque cellule (C[j]) d'un groupe prédéterminé de cellules adjacentes (C[1] à C[J]) auxquelles ledit usager donné (UG(i)) est susceptible d'être successivement affecté, l'usager donné se trouvant dans une première cellule (C[1]) dudit groupe prédéterminé lors de ladite demande d'établissement de communication :

- des premières étapes selon lesquelles si une première distance (D(i)[j]) séparant lors de ladite demande d'établissement de communication l'usager donné d'un point de transfert prédéterminé de l'usager donné ($X_h(i)[j-1,j]$) dans ladite chaque cellule (C[j]), ladite première distance étant nulle lorsque ladite chaque cellule est ladite première cellule dudit groupe prédéterminé, est supérieure (E3) à une distance prédéterminée ($D_{max}[j]$) égale à une longueur maximale de ladite chaque cellule (C[j]) parallèlement à ladite direction prédéterminée, une réservation d'un canal de communication associé à ladite chaque cellule (C[j]) est demandée (E4) pour/par le terminal de l'usager donné (C[j]) lorsque le terminal de l'usager donné (UG(i)) se trouve sensiblement à ladite distance prédéterminée dudit point de transfert prédéterminé ($X_h(i) [j-1,j]$),

caractérisé en ce qu'il comprend en outre :

- des secondes étapes selon lesquelles si ladite première distance (D(i)[j]) est inférieure à ladite distance prédéterminée ($D_{max}[j]$), alors (a) s'il existe un canal de communication libre associé à ladite chaque cellule (C[j]), ce canal est réservé (E6) pour/par le terminal de l'usager donné, (b) si ladite chaque cellule est différente de la première cellule (C[1]) et si aucun des canaux associés à ladite chaque cellule n'est libre (E5) mais si, parmi ceux-ci, il existe (E13) un canal non-réservé occupé par le terminal d'un usager quelconque dudit système de télécommunications situé à une distance du contour de ladite chaque cellule suivant une direction opposée à la direction prédéterminée inférieure à la première distance (D(i)[j]), ce canal est réservé (E15) pour/par le terminal de l'usager donné, (c) sinon, ladite demande d'établissement de communication est refusée (E7; E12; E14), et

- des troisièmes étapes selon lesquelles ladite demande d'établissement de communication est refusée (E18) si un nombre d'usagers prédéterminés ($N_{ATG}(i)\{Z_n(i) [j]\}$) en cours de communication et inclus dans l'une de zones ($Z_n(i) [j]$) obtenues par translation de ladite chaque cellule (C[j]) suivant ladite direction prédéterminée d'une distance comprise entre ladite première distance (D(i)[j]) et une seconde distance (D(i)[j+1]) est au moins égal (E17) à une capacité en canaux de communication (CC[j]) de ladite chaque cellule, ladite seconde distance (D(i)[j+1]) séparant lors de la demande d'établissement de commmunication l'usager donné d'un point de transfert prédéterminé ($X_h(i)[j, j+1]$) de l'usager donné (UG(i)) dans une cellule d'affectation (C[j+1]) succédant à ladite chaque cellule (C[j]).

2. Procédé conforme à la revendication 1, selon lequel si, lors de ladite demande d'établissement de communication, ladite première distance (D(i)[j]) est supérieure à ladite distance prédéterminée ($D_{max}[j]$), ladite réservation d'un canal de communication n'est demandée (E34) que si un nombre d'usagers prédéterminés en cours de communication ($N_{ATG}(i)\{Z_0(i)[j]\}$) inclus dans une zone obtenue par translation de ladite chaque cellule (C[j]) suivant ladite direction prédéterminée de ladite première distance (D(i)[j]), et dont les groupes prédéterminés de cellules adjacentes respectifs incluent de préférence ladite chaque cellule, est inférieur à la capacité en canaux de communication (CC[j]) de ladite chaque cellule (C[j]).

3. Procédé conforme à la revendication 1 ou 2, selon lequel ledit groupe prédéterminé de cellules (C[1] à C[J]) est constitué de sorte que ledit usager donné (UG(i)) ne soit transféré dans ladite chaque cellule (C[j]), lorsque celle-ci est une cellule autre que ladite première cellule C[1] dudit groupe prédéterminé, qu'après être resté affecté le plus longtemps possible à une cellule précédente (C[j-1]).

4. Procédé conforme à l'une quelconque des revendications 1 à 3, selon lequel ledit groupe prédéterminé de cellules (C[1] à C[J]) est constitué de sorte que lorsque, en sortie d'une cellule dudit groupe prédéterminé, ledit usager donné est inclus simultanément dans plusieurs cellules dudit système de télécommunications, la cellule parmi ces dernières à laquelle il est affecté soit celle dans laquelle son temps de passage est le plus long.

5. Procédé conforme à l'une quelconque des revendications 1 à 4, comprenant une étape ($E_{prel}$) pour supprimer préalablement dans chacune des cellules dudit système de télécommunications au moins une zone de chevauchement avec une autre cellule dudit système de télécommunications.

6. Procédé conforme à la revendication 1, selon lequel les cellules dudit système de télécommunications sont identiques, de forme rectangulaire, jointives, et alignées relativement à ladite direction prédéterminée, et selon lequel lesdites troisièmes étapes sont supprimées.

7. Procédé conforme à la revendication 1 ou 6, selon lequel ledit nombre d'usagers prédéterminés en cours de communication ($N_{ATG}(i)\{Z_n (i) [j]\}$) concerne seulement des usagers prédéterminés dont les groupes prédéterminés de cellules respectifs incluent ladite chaque cellule ($C[j]$) .

8. Procédé conforme à l'une quelconque des revendications 1 à 7, selon lequel le nombre de cellules incluses dans ledit groupe prédéterminé de cellules ($C[1]$ à $C[J]$) dépend d'une durée ($\tau(i)$) préalablement définie au cours de laquelle ledit procédé est appliqué pour ledit usager donné ($UG(i)$) après chaque demande d'établissement de communication émise par le terminal de celui-ci.

*FIG.1*

EP 0 866 570 A1

*FIG.2A*

Réduction de la surface des cellules — E$_{prel}$

Demande d'établissement de communication par l'usager UG(i) — E0

Affectation de l'usager UG(i) à des cellules C[1] à C[J] — E1

j = 0

j ≡ j+1 — E2

E3

non — D(i)[j] ⩾ D$_{max}$[j] — oui

E7

Refus de demande d'établissement de communication

oui — j=1 — non

Un canal libre dans cellule C[j] ? — E5

non

E34'

Refus de demande d'établissement de communication

non

oui

$N_{ATG}(i)\{Z_0(i)[j]\} < CC[j]$ — E34

oui

FIG.2B

ALG

Réservation de canal dans cellule C[j] — E6

Lorsque UG(i) est à D$_{max}$[j] de X$_h$(i)[j−1,j], demande de réservation de canal dans cellule C[j] — E4

n = −1

n ≡ n+1 — E16

E17 — $N_{ATG}(i)\{Z_n(i)[j]\} < CC[j]$ — non

oui

non — n = N — E19

Refus de demande d'établissement de communication — E18

oui

non — j = J — E20

oui

Acceptation de demande d'établissement de communication — E21

# *FIG.2B*

ALG

**E5**

non

j = 1

**E8** — Déterminer la position des usagers en cours de communication dans la cellule C[j]

**E9** — Déterminer les distances maximales restant à parcourir dans la cellule C[j]

**E10** — Classer les usagers UG(1)[j] à UG(P)[j] en fonction de leurs distances restantes $D_R(1)[j] \leqslant ... \leqslant D_R(P)[j] < D(i)[j] \leqslant D_R(P+1)[j]$

Refus de demande d'établissement de communication

**E12**

oui

P = 0 — **E11**

non

m = P+1

m ≡ m−1

non

Canal occupé par UG(m)[j] réservé ? — **E13**

oui

Réservation de canal dans cellule C[j] — **E15**

m = 1

non

oui

Refus de demande d'établissement de communication — **E14**

n = −1 — **E16**

# FIG.3A

# FIG.3B

# FIG.4

$D(i)[j]$          $L(i)[j]$

$Z_0(i)[j]$

$C[j-1]$   $C[j]$   $C[j+1]$

$T(i)$

$X_0(i)$

$Z_N(i)[j]$   $Z_n(i)[j]$   $X_h(i)[j-1,j]$   $X_h(i)[j,j+1]$

# FIG.5

$S_1$

$C[j]$

$T(i)$

$S_K$

$D_{max}[j]$

## FIG.6A

## FIG.6B

# FIG.7A

C[j]

UGq

Dq

# FIG.7B

$D_R(P)[j]$

$D(i)[j]$

$X_0(i)$

C[j]

UG(1)[j]

T(i)

UG(2)[j]

UG($M_j$)[j]

UG(P)[j]

# FIG.8

# FIG.9

# FIG.10

$D(i)[j]$

$D_{max}$

$X_0(i)$

$X_h(i)[j-1,j]$   $X_h(i)[j,j+1]$   $T(i)$

C[1]   C[2]   C[3]   C[j]   $P_L(i)$   C[J]

$L_T(i)$

# FIG.12

déplacement du satellite
sur orbite $O_a$

rotation de la terre

$O_b$   $O_a$

$C_{1b}$   $X_{1a}$

$X_{1b}$   TR   $C_{1a}$

$X_{2b}$   $C_{2a}$

$C_{2b}$   $X_{2a}$

déplacement du satellite
sur orbite $O_b$

# FIG.11

Demande d'établissement de communication par l'usager UG(i) — E0$_a$

Affectation de l'usager UG(i) à des cellules C[1] à C[J] — E1$_a$

j = 0

i ≡ j+1 — E2$_a$

E3$_a$ — j < 3

non → Lorsque UG(i) est à D$_{max}$[j] de X$_h$(i)[j−1,j], demande de réservation de canal dans cellule C[j] — E4$_a$

oui

E7$_a$ Refus de demande d'établissement de communication

oui — non — j=1

Un canal libre dans cellule C[j]? — E5$_a$

oui

ALG$_a$

Réservation de canal dans cellule C[j] — E6$_a$

non — j = 2

oui

E21$_a$ — Acceptation de demande d'établissement de communication

non — j = J — E12$_a$

EP 0 866 570 A1

Office européen des brevets **RAPPORT DE RECHERCHE EUROPEENNE**

Numéro de la demande

EP 98 40 0393

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DEL RE E ET AL: "EFFICIENT DYNAMIC CHANNEL ALLOCATION TECHNIQUES WITH HANDOVER QUEUING FOR MOBILE SATELLITE NETWORKS" IEEE JOURNAL ON SELECTED AREAS IN COMMUNICATIONS, vol. 13, no. 2, 1 février 1995, NEW-YORK,US, pages 397-405, XP000489304 * page 398, colonne de droite, ligne 29 - page 404, colonne de droite, ligne 6; figures 1-12 * | 1-8 | H04B7/185 |
| X | CARTER P ET AL: "EVALUATION OF HANDOVER MECHANISMS IN SHADOWED LOW EARTH ORBIT LAND MOBILE SATELLITE SYSTEMS" INTERNATIONAL JOURNAL OF SATELLITE COMMUNICATIONS, vol. 13, 1 mai 1995, pages 177-190, XP000566873 * page 181, colonne de gauche, ligne 1 - page 184, colonne de gauche, ligne 33; figures 1-13 * | 1-8 | |
| X | FR 2 720 887 A (MOTOROLA) 8 décembre 1995 * revendications 1-9; figures 1-6 * | 1-8 | |
| X | WO 96 13946 A (MOTOROLA) 9 mai 1996 * page 8, ligne 5 - page 12, ligne 28; figures 3-5 * | 1-8 | |

DOMAINES TECHNIQUES RECHERCHES (Int.Cl.6)

H04B

Le présent rapport a été établi pour toutes les revendications

| Lieu de la recherche | Date d'achèvement de la recherche | Examinateur |
|---|---|---|
| LA HAYE | 20 avril 1998 | Bischof, J-L |